Europäisches Patentamt

European Patent Office

Office européen des brevets

(19)

(11) Numéro de publication: **0 110 790**
A1

(12) ## DEMANDE DE BREVET EUROPEEN

(21) Numéro de dépôt: 83402290.7

(22) Date de dépôt: 28.11.83

(51) Int. Cl.³: **C 04 B 13/00**, C 04 B 7/32,
E 21 D 11/10

---

(30) Priorité: 29.11.82 FR 8219989

(43) Date de publication de la demande: 13.06.84
Bulletin 84/24

(84) Etats contractants désignés: **DE FR GB IT NL SE**

(71) Demandeur: **LAFARGE FONDU INTERNATIONAL,**
**157 avenue Charles de Gaulle, F-92521 Neuilly sur Seine**
**Cedex (FR)**
Demandeur: **SOCIETE ANONYME D'EXPLOSIFS ET DE**
**PRODUITS CHIMIQUES, 61, rue Galilée, F-75008 Paris**
**(FR)**

(72) Inventeur: **Mathieu, Alain, Route de Montélimar Ancone,**
**F-26100 Montelimar (FR)**
Inventeur: **Varizat, André, Les Sautelles, F-07220 Viviers**
**(FR)**
Inventeur: **Benichou, Alain, 1, rue du Biez,**
**F-21270 Pontailler S/Saone (FR)**
Inventeur: **Nicolas, Patrick, Arcelot, F-21310 Mirebeau**
**S/Beze (FR)**

(74) Mandataire: **Richebourg, Michel François et al, Cabinet**
**Beau de Loménie 55, rue d'Amsterdam, F-75008 Paris**
**(FR)**

---

(54) **Mortier et combinaison de ce mortier avec des fibres de renfort, pour le soutènement de galeries de mines et analogues.**

(57) L'invention concerne un mortier de sable et ciment alumineux et la combinaison de ce mortier avec des fibres notamment de verre.

Ces matériaux peuvent être projetés sur les parois de galeries pour réaliser un soutènement, avec l'eau nécessaire.

On atteint dans un délai remarquablement court d'excellentes caractéristiques de flexion et compression.

EP 0 110 790 A1

Mortier et combinaison de ce mortier avec des fibres de renfort, pour le soutènement de galeries de mines et analogues.

La présente invention concerne le secteur technique des mortiers de sable et de ciment alumineux et du soutènement des galeries de mines et ouvrages analogues, tunnels, galeries de barrage, etc.

On entend ici par "soutènement" la formation sur les parois et le toit de la galerie d'un revêtement provisoire plus ou moins épais.

Lorsque l'on creuse une galerie, notamment sur le front de taille dans une mine, il est en effet nécessaire de consolider immédiatement les parois pour protéger le personnel (notamment contre le risque de chute de blocs de roches), en attendant la projection d'un revêtement définitif de béton. Cette consolidation, ou "soutènement provisoire", est destinée à résister durant quelques heures, en attendant que le béton projeté joue son rôle. Cette technique évite la pose de cintres métalliques qui retarde considérablement la taille.

On voit donc qu'il est essentiel, pour établir un soutènement provisoire, de disposer d'un matériau simple à mettre en oeuvre, peu coûteux et permettant d'atteindre le plus rapidement possible des caractéristiques de résistances mécaniques suffisantes.

On est parvenu selon l'invention à améliorer de manière décisive ce dernier point puisque, par exemple, le revêtement obtenu selon l'invention présente une résistance à la compression supérieure à 180 bars environ, seulement 15 min environ après la projection du mélange sur la paroi.

Ce résultat surprenant est obtenu par le choix d'une granulométrie spécifique pour les constituants (ciment alumineux et sable) du mortier, ainsi que d'un rapport élevé ciment/sable inhabituel. On améliore de plus certaines propriétés mécaniques essentielles (flexion) du revêtement en combinant le mortier avec des fibres de renfort.

Comme ciment alumineux, on choisira de manière préférée un produit contenant au moins 35 % en poids d'aluminate monocalcique, de type "FONDU LAFARGE".

Il est essentiel selon l'invention que la surface spécifique BLAINE de ce ciment soit au moins égale à 4 000 $cm^2/g$.

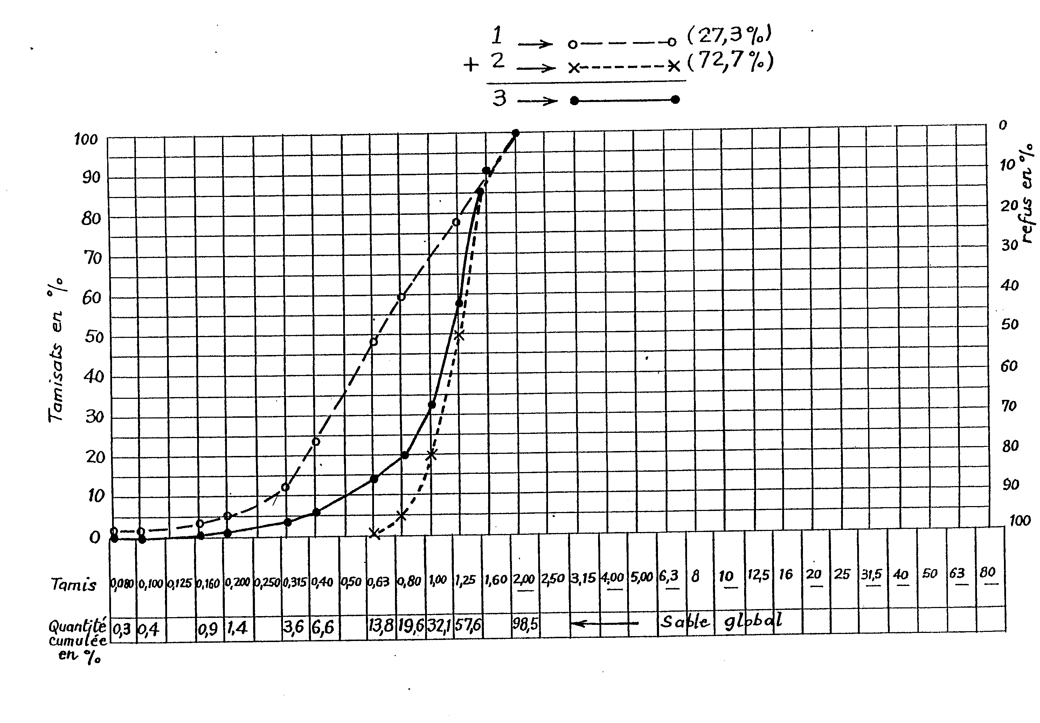

Comme sable, on choisira de manière préférée un sable silicieux ou silicocalcaire de granulométrie 0 à 2,5 mm, dont 75 à 90 % des grains ont une dimension supérieure à 0,6 mm. On peut obtenir une telle granulométrie en mélangeant par exemple deux sables "0,63 - 2 mm" (72,7 %) et "0 - 2 mm" (27,3 %). On obtient la courbe de granulométrie représentée sur la figure unique annexée.

La proportion en poids ciment alumineux/sable devra être choisie entre 40/60 et 80/20.

Cette proportion ciment alumineux/sable sera avantageusement de l'ordre de 45/55.

Ces proportions sont tout à fait inhabituelles ; en effet, les proportions classiques sont de 15/85 à 35/65 au maximum.

Le mortier selon l'invention contient également deux additifs :

(% en poids par rapport au ciment alumineux)

- gluconate de sodium : 0,001 % à 0,05 %, de préférence 0,003 % à 0,02 %,

- carbonate de lithium : 0,1 % à 0,3 %.

Le gluconate de sodium remplit une fonction de réducteur d'eau et le carbonate de lithium d'accélérateur.

En ce qui concerne la granulométrie du ciment alumineux, l'homme de métier sait que le broyage d'un tel produit est difficile et très coûteux, notamment pour les ciments obtenus par fusion.

Ceci explique probablement que l'on n'ait pas songé à ce jour à explorer cette voie de recherche. L'essentiel selon l'invention est que la finesse du ciment alumineux soit supérieure à 4 000 $cm^2/g$, mais on sera en pratique limité par le coût du surbroyage. Une valeur avantageuse sera voisine de 5 000 $cm^2/g$.

La fabrication du mortier selon l'invention s'effectue par les techniques classiques connues de l'homme du métier.

Un autre aspect de l'invention réside dans l'amélioration des propriétés mécaniques du produit de revêtement pour soutènement obtenu à partir du mortier ci-dessus, amélioration obtenue grâce à l'adjonction de fibres de renfort, à raison de 0,4-5 % en poids par rapport au mortier, de préférence environ 1 % en poids.

Ces fibres peuvent être organiques (polyéthylène, polypropylène, ...) ou minérales (fibres de verre, acier, amiante, ...).

On utilisera préférentiellement des fibres de verre coupées.

Le mortier, ou la combinaison mortier + fibres coupées, selon l'invention, est utilisé de la manière suivante.

Le mortier (ou le mortier préalablement mélangé avec jusqu'à 5 % de fibres, de préférence environ 1 % de fibres) est introduit dans la trémie d'alimentation d'une machine à projeter le béton par voie sèche ou toute autre machine du même type, bien connue.

Le produit (mortier, ou mortier + fibres) sec est envoyé (transport pneumatique) jusqu'à une lance de projection "simple mouillage" (ou une lance analogue) qui est un matériel également bien connu.

L'apport d'eau est effectué à l'extrémité de la lance, éventuellement avec un compresseur pour atteindre une pression d'eau d'au moins 5 bars.

La proportion d'eau à utiliser est d'environ 12 à 20 % en poids par rapport au mortier (ou au produit mortier + fibres).

On projette ensuite le produit de revêtement pour soutènement sur la paroi à traiter, qui peut avoir été auparavant nettoyée à l'eau ou soufflée à l'air, pour améliorer l'accrochage du produit.

Le temps de début de prise varie entre 3 et 10 min environ, en fonction de la température ambiante.

Au terme d'une heure par exemple, la résistance mécanique est très supérieure à celle atteinte dans le même laps de temps par les mortiers fabriqués à l'aide d'un ciment alumineux fondu classique (c'est-à-dire non surbroyé).

Les exemples suivants illustrent l'invention sans toutefois en limiter la portée.

Exemple 1

Composition pour mortier

--ciment alumineux "FONDU LAFARGE" broyé jusqu'à une finesse (surface spécifique BLAINE) de 5 010 $cm^2/g$,

- sable siliceux de granulométrie 0,3-1,2 mm,
- rapport ciment/sable : 75/25 en poids,
- additifs :
  . gluconate de sodium : 0,004 %
  . $Li_2CO_3$ : 0,133 %
  (en poids par rapport au ciment)

### Revêtement de soutènement

- rapport eau/mélange sec = 0,20
- début de prise (essai VICAT) 4 min 45 s
- essais de résistance mécanique classique sur prismes 4,x 4 x 16 cm selon norme française P 15-413).

|        | Flexion (bars) | Compression (bars) |
| ------ | -------------- | ------------------ |
| 15 min | 23,5           | 282                |
| 1 h    | 45             | 529                |
| 6 h    | 101            | 563                |

<u>Exemple 2</u> : formule à 1 % en poids de fibres

On utilise la même composition de mortier que dans l'exemple 1.

On réalise le mélange sec suivant :

- mortier   83,19 % en poids ;
- fibres de verre ROVING coupées longueur 6 mm :   0,84 % en poids.

Puis, on projette avec 15,97 % d'eau (20°C) (rapport eau/mélange sec = 0,19)

- temps de gel : 3 min 15 s,
- essai de traction par fendage ("essai brésilien") 38 bars après 5 j (J + 5)
- essai de résistance à la compression (essai clasique sur prismes 4 x 4 x 16 cm)

   15 min : 203 bars

   60 min : 343 bars.

Exemple 3 : formule à 2 % en poids de fibres.

On opère comme dans l'exemple 2, mais avec :   mortier    : 81,70 % en poids

fibres    :  1,63 % en poids

eau       : 16,67 % en poids

eau/mélange sec = 0,20 en poids

- temps de gel : 3 min  1 s

- essai de traction par fendage ("essai brésilien") : 42,4 bars à J + 5

- essai de compression (prismes 4 x 4 x 16 cm)

15 min : 203 bars

60 min : 306 bars

De plus, les formules des exemples 2 et 3 conduisent à des caractéristiques de flexion améliorées.

Ainsi, avec ces formules, on conserve une résistance en compression à 15 min tout à fait surprenante, en améliorant la flexion, d'où une combinaison remarquable de propriétés pour le soutènement, notamment pour le soutènement inmmédiat provisoire.


Exemple 4 (exemple comparatif)

On trouvera ci-dessous une référence bibliographique traitant des caractéristiques du béton projeté.

"Projection des mortiers, bétons et plâtres" C. RESSE et M. VENUAT 1ère édition, 1981, Techniques et Applications Bâtiments et Travaux Publics, page 63.

"Mortier industriel très accéléré pour projection" mortier prêt à l'emploi composé de ciment, de charges spéciales (granulométrie 0,3 mm) d'adjuvant hydrofuge et accélérateur (sans chlore)

Projection par voie sèche

début de prise de ce mortier = de 3 à 10 s suivant la température

|                | Résistance en compression | Résistance à la traction par fendage (essai brésilien) |
| -------------- | ------------------------- | ------------------------------------------------------ |
| après 2 h      | 45 bars                   | 15 bars                                                |
| après 24 h     | 175 bars                  | "        "                                             |
| après 7 j      | 325 bars                  | "        "                                             |
| après 28 j     | 400 bars                  | 45 bars                                                |

Dans tout le texte, on désigne par essai de traction par fendage ou essai brésilien l'essai qui consiste à comprimer une éprouvette cylindrique, selon deux génératrices, entre les plateaux d'une presse. La résistance est donnée par :

$$\tau = \frac{2\,P}{\pi\,D\,l}\,.$$

P = pression au moment où l'éprouvette se fend

D = diamètre de l'éprouvette

l = longueur de l'éprouvette.

On pourra se référer à :

"Guide pratique du béton" par G. DREUX 1970, Soc de diffusion des techniques du bâtiment et des travaux publics page 81 "résistance en traction par fendage".

"L'essai consiste à écraser un cylindre de béton suivant deux génératrices opposées entre les plateaux d'une presse, cet essai est souvent appelé "essai brésilien".

La comparaison des résistances obtenues en traction-flexion avec les résistances mesurées en traction directe ou par fendage montre que ces dernières sont en général et en moyenne inférieures de 40 % environ par rapport aux premières.

Exemple 5 (comparatif)

On a opéré comme dans l'exemple 1, mais en utilisant une formulation contenant un ciment fondu classique (non surbroyé).

Les résultats, dans les mêmes essais que pour l'exemple 1, sont les suivants :

|  | Flexion (bars) | Compression (bars) |
|---|---|---|
| 15 min | 10 | 58 |
| 6 h | 18 | 80 |

Exemple 6 : la formulation la plus intéressante à ce jour est la suivante :

- ciment alumineux "FONDU LAFARGE" broyé jusqu'à une finesse (surface spécifique BLAINE) de 5010 $cm^2/g$,
- sable siliceux de granulométrie telle que représentée sur la courbe 3 de la figure unique, dans le rapport en poids ciment/sable = 44/56

- additifs (en poids/ciment)

      - gluconate de sodium : 0,0015 %

      - $Li_2 CO_3$         : 0,27   %

- fibres de verre : 1 % en poids/mortier.

Cette formulation présente une meilleure aptitude à la projection, produit moins de poussières, et le revêtement obtenu présente un retrait moindre.

On note de plus un meilleur écoulement dans la machine de projection et un meilleur mouillage des matières sèches par l'eau de projection.

Gâché mécaniquement puis coulé dans les moules 4 x 4 x 16 cm, le mortier présente les propriétés suivantes :

|  | Résistance en flexion (bars) | Résistance en compression (bars) |
|---|---|---|
| après 15 min | 35 - 45 | 150 - 200 |
| - 1 h | 45 - 55 | 250 - 350 |
| - 6 h | 60 - 70 | 300 - 400 |

Pour un rapport eau/matières sèches égale à 0,135, le temps de prise de cette formulation à l'aiguille VICAT est de 3 min 30 s.

0110790

## Avantages de l'invention, autres que le durcissement rapide

- main-d'oeuvre réduite à deux hommes,
- suppression du poste préparation,
- pertes négligeables comparées à celles du béton projeté, et des mortiers habituellement utilisés,
- souplesse d'utilisation : la mise en oeuvre de petites quantités est très aisée,
- nettoyage du matériel exclusivement à l'air comprimé,
- la grande force de projection assure un bon compactage,
- le transport du produit à sec permet des projections à longue distance,
- rendements élevés car l'épaisseur de revêtement nécessaire est plus faible que pour le béton projeté.

Les applications des produits selon l'invention sont notamment :

- consolidation immédiate des terrains après excavation,
- protection des terrains contre la corrosion à l'air,
- protection des galeries contre les venues de Gaz - Radon - Méthane,
- revêtement pour canaliser l'aérage,
- revêtement anti-feu dans les galeries,
- prévention des galeries contre l'écaillage,
- renforcement du soutènement,
- soutènement immédiat derrière machine d'abattage, associé ou non au boulonnage suivant la nature des terrains,
- barrages d'aérage, anti-feu, etc.

On pourra éventuellement utiliser ces revêtements pour réaliser un soutènement durable, en effectuant un lissage à la truelle du revêtement déposé en épaisseur convenable.

REVENDICATIONS

1. Mortier de sable et de ciment alumineux, pour le soutènement de galeries par projection avec de l'eau sur la paroi, caractérisé en ce que la surface spécifique BLAINE du ciment alumineux est supérieure à 4 000 cm$^2$/g, en ce que ledit ciment contient au moins 35% en poids d'aluminate monocalcique, et en ce que le rapport en poids ciment alumineux/sable est compris entre 40/60 et 80/20, et est de préférence voisin de 45/55.

2. Mortier selon la revendication 1, caractérisé en ce que la surface spécifique BLAINE dudit ciment alumineux est voisine de 5 000 cm$^2$/g.

3. Mortier selon la revendication 1 ou 2, caractérisé en ce qu'on utilise un sable siliceux ou silico-calcaire de granulométrie 0-2,5 mm, dont de préférence 75 à 90 % des grains ont une dimension supérieure à 0,6 mm.

4. Mortier selon l'une quelconque des revendications 1 à 3, caractérisé en ce qu'il comprend de plus deux additifs :
- gluconate de sodium : 0,001 à 0,05 %, de préférence 0,003 à 0,2 % et
- carbonate de lithium : 0,1 à 0,3 %
(% en poids par rapport au ciment alumineux)

5. Mortier chargé en fibres de renfort, caractérisé en ce qu'il consiste en un mortier selon l'une quelconque des revendications 1 à 4 contenant de 0,4 à 5 % en poids de fibres coupées organiques ou minérales, notamment polyéthylène, polypropylène, acier, amiante, verre, de préférence environ 1 %.

6. Mortier selon la revendication 5, caractérisé en ce que les fibres consistent en fibres de verre coupées de longueur 6 mm.

7. Procédé de soutènement de galeries, notamment de galeries de mines, assurant un soutènement immédiat, caractérisé en ce que l'on projette sur la paroi à traiter un mortier ou mortier chargé en fibres de renfort selon l'une quelconque des revendications 1 à 6, avec environ 12 à 20 % en poids d'eau (par rapport au mortier).

8. Mortier selon l'une quelconque des revendications 1 à 4, caractérisé en ce qu'il consiste en :

- ciment alumineux "FONDU LAFARGE" de surface spécifique BLAINE :
  5 010 cm$^2$/g,
- sable siliceux de granulométrie : 0 - 2,5 mm (75 à 90 % > 0,6 mm) dans un rapport ciment/sable de 44/56 en poids, et contient les additifs suivants :

- gluconate de sodium : 0,0015 %
- carbonate de lithium : 0,27. %

    (% par rapport au ciment)

1 → o----------o (27,3%)
+ 2 → x----------x (72,7%)
3 → •——————•

Tamisats en %

refus en %

| Tamis | 0,080 | 0,100 | 0,125 | 0,160 | 0,200 | 0,250 | 0,315 | 0,40 | 0,50 | 0,63 | 0,80 | 1,00 | 1,25 | 1,60 | 2,00 | 2,50 | 3,15 | 4,00 | 5,00 | 6,3 | 8 | 10 | 12,5 | 16 | 20 | 25 | 31,5 | 40 | 50 | 63 | 80 |
|---|---|---|---|---|---|---|---|---|---|---|---|---|---|---|---|---|---|---|---|---|---|---|---|---|---|---|---|---|---|---|---|
| Quantité cumulée en % | 0,3 | 0,4 | | 0,9 | 1,4 | | 3,6 | 6,6 | | 13,8 | 19,6 | 32,1 | 57,6 | | 98,5 | | | | Sable global | | | | | | | | | | | | |

# RAPPORT DE RECHERCHE EUROPEENNE

Office européen
des brevets

**0110790**
Numéro de la demande

EP 83 40 2290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 175 364 (RHONE-PROGIL)<br>* page 1, lignes 5,6,20-27,32,33; page 5, lignes 31-35; page 8, lignes 18-23 * | 1,3,4 | C 04 B 13/00<br>C 04 B 7/32<br>E 21 D 11/10 |
| Y | US-A-3 257 219 (A. KLEIN)<br>* colonne 1, lignes 20-25; colonne 6, lignes 42-44 * | 1,2 | |
| Y | GB-A-2 058 037 (COAL INDUSTRY)<br>* résumé; page 1, lignes 71,72 * | 1,4 | |
| Y | FR-A-1 540 885 (CARBONRUNDUM COMP.)<br>* page 1, colonne de droite, lignes 7-12; résumé, point B * | 1,5 | |

**DOMAINES TECHNIQUES RECHERCHES (Int. Cl. 3)**

C 04 B 13/00
C 04 B 7/00
E 21 D 11/00
E 21 D 19/00
E 21 F 15/00

Le présent rapport de recherche a été établi pour toutes les revendications

| Lieu de la recherche | Date d'achèvement de la recherche | Examinateur |
|---|---|---|
| LA HAYE | 28-02-1984 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO Form 1503 03 82